(19) Europäisches Patentamt
European Patent Office
Office européen des brevets

(11) Publication number: **0 040 415**
**B1**

(12) # EUROPEAN PATENT SPECIFICATION

(45) Date of publication of patent specification: **18.12.85**

(51) Int. Cl.$^4$: **H 01 B 3/30,** C 08 L 79/08, C 09 D 3/16

(21) Application number: **81103754.8**

(22) Date of filing: **15.05.81**

(54) **Heat-resistant resin compositions and their use for coating metal substrates.**

(30) Priority: **17.05.80 JP 65529/80**

(43) Date of publication of application: **25.11.81 Bulletin 81/47**

(45) Publication of the grant of the patent: **18.12.85 Bulletin 85/51**

(84) Designated Contracting States: **DE FR GB**

(56) References cited:
**EP-A-0 023 610**
**EP-A-0 028 419**
**DE-A-2 728 843**
**FR-A-2 237 931**

**Römpps Chemie-Lexikon (1975), S. 2758**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Yonezawa, Kazuya**
**9-30-406, 2-chome, Maikodai, Tarumi-ku**
**Kobe-shi Hyogo (JP)**
Inventor: **Nagano, Hirosaku**
**6-510, 6-chome, Maikodai Tarumi-ku**
**Kobe-shi Hyogo (JP)**

(74) Representative: **Vossius Vossius Tauchner Heunemann Rauh**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to improved heat-resistant resin compositions and their use for coating metal substrates. Among the known heat-resistant resins polyimide resins exhibit very good electrical characteristics, heat resistance and mechanical properties and are therefore useful in coating compositions e.g. as insulating varnishes, yielding heat-resistant films or coatings, respectively. However, if metals such as copper and aluminum sheets, foils, coils or endless belts are coated with a polyimide resin varnish, the resulting film or coating has insufficient peel resistance or tensile strength.

It is the object of the invention to provide novel heat-resistant resins, containing a polyimide resin varnish which exhibit improved peel resistance, heat resistance, tensile strength and elongation.

This object is solved by the surprising finding that when a bismaleimide is added to a varnish of a polyamide acid which is the precursor of a polyimide resin, the varnish composition obtained affords a polyimide resin coating or film which shows increased mechanical strength against peeling and also improved elongation while retaining the desired heat resistance.

The subject matter of the invention therefore is a heat-resistant resin composition which is characterized in that the composition comprises a varnish of a polyamide acid having an inherent viscosity of at least 1.0 dl/g which is the precursor of a heat-resistant polyimide resin containing active hydrogen atoms in the molecule and a bismaleimide compound or a derivative thereof axdmixed with the varnish.

Another subject matter of the invention is the use of the novel heat-resistant resin compositions for coating metal substrates.

Polyimide resin varnishes usable in this invention include varnishes of a polyimide which is soluble in an organic solvent and contains active hydrogen atoms in the molecule, e.g. in the form of amino groups, and varnishes of an (oligomeric) polyamide acid, i.e. the precursor of the polyimide. To be useful in this invention, such varnishes have an inherent viscosity ($\eta_{inh}$) of at least 1.0 dl/g. It is especially preferred to use varnishes having an inherent viscosity of at least 2.0 dl/g resulting in remarkably improved properties of the coatings.

The "inherent viscosity" is generally given by the following equation:

$$\eta_{inh} = \frac{l_n \eta_r}{C} \quad \left(\frac{dl}{g}\right)$$

$$\eta_r = \frac{\eta}{\eta_o}$$

where $\eta_r$ is the relative viscosity (called "logarithmic viscosity"), $\eta_o$ means the viscosity of solvent, $\eta$ stands for the viscosity of the solution, C is concentration of polymer (g/dl), and $\eta_{inh}$ is the "inherent viscosity" in dl/g.

Examples of useful polyamide varnishes are known varnishes obtained by reacting an aromatic tetracarboxylic anhydride with an aromatic diamine.

Examples of useful aromatic tetracarboxylic anhydrides are e.g. pyromellitic dianhydride, benzophenonetetracarboxylic dianhydride, naphthalene-1,2,5,6-dianhydride and 3,3',4,4'-diphenyltetracarboxylic dianhydride. Examples of useful aromatic diamines are e.g. 4,4'-diaminodiphenylmethane, 4,4'-diaminophenyl ether and 4,4'-diaminodiphenylsulfone. The acid anhydride is reacted with the diamine preferably in the presence of a solvent, such as DMF, dimethylacetamide, N-methylpyrrolidone, DMSO, HMPA or a similar aprotic polar solvent. Such solvents may be used alone or in admixture. It is also possible to use for instance xylene or toluene or similar aromatic hydrocarbons admixed with such solvents, in an amount of up to 30% by weight based on the combined amount of solvents used.

The bismaleimides which can be used are compounds represented by the following formula A or B.

Formula A

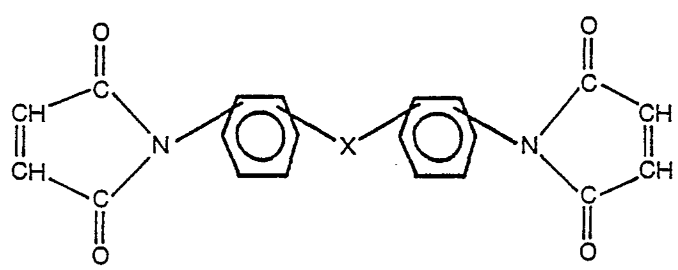

wherein X is $—CH_2—$, $—O—$, $—S—$, $—SO_2—$ or $—C(CH_3)_2—$.

Formula B

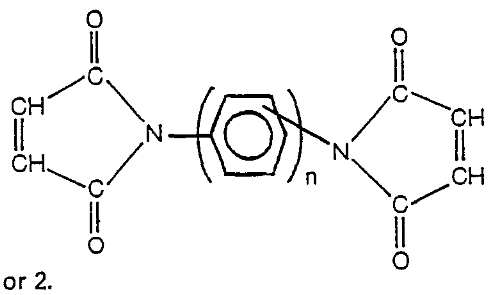

wherein n is an integer of 1 or 2.

Such a bismaleimide can be prepared according to conventional methods by condensation of maleic anhydride with the corresponding diamine at elevated temperatures. According to the present invention, it is also possible to use bismaleimide derivatives carrying substituents, such as methyl or other alkyl groups, halogen atoms, etc., as shown by the following formulae A' and B'.

Formula A'

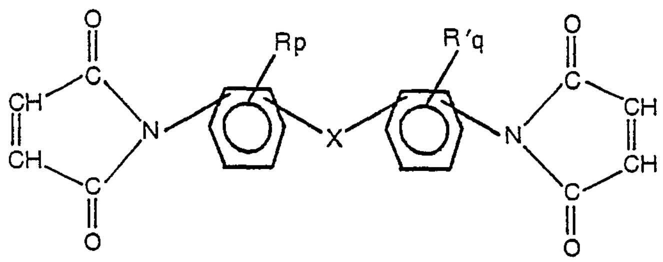

wherein X is $—CH_2—$, $—O—$, $—S—$, $—SO_2—$ or $—C(CH_3)_2—$, R and R' are alkyl or halogen, and p and q are O or an integer of 1—4.

Formula B'

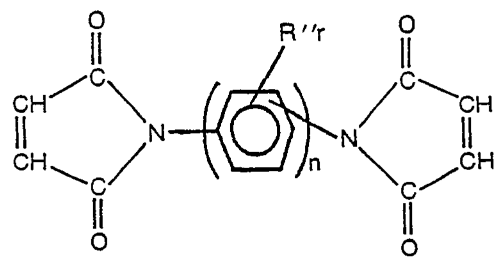

wherein R'' is alkyl or halogen, n is an integer of 1 or 2, and r is O or an integer of 1—4.

The term alkyl denotes groups having in general 1 to 10, preferably 1 to 4 carbon atoms.

The term halogen denotes preferably fluorine and chlorine.

The bismaleimide is added to the varnish preferably in an amount of 0.1 to 30 parts by weight per 100 parts by weight of the solids in the varnish. Although more than 30 parts by weight of bismaleimide may be used, the resulting composition gives a brittle product, whereas with less than 0.1 part by weight of the bismaleimide, the improvement in peel strength and elongation is less pronounced. It is preferred to use 1 to 10 parts by weight of the bismaleimide because better results are then achieved not only with respect to peel strength but also to tensile strength and elongation.

The reason why the use of the bismaleimides produces various improved properties presumably is the fact that the active hydrogen atoms in the terminal amino groups remaining in the polyimide or in the polyamide acid precursor are added to the carbon-carbon double bond of the bismaleimide to give an increased molecular weight. More specifically, in the case where a solution of a polyamide acid, i.e. the precursor of the polyimide, in an organic solvent is used for preparing a varnish composition according to the invention, the composition is applied and spread onto a metal substrate such as sheet, foil, coil or endless belt, and the applied varnish film is heated for removing the solvent and for imidation to form the desired coating on the substrate. It is thought that the bismaleimide reacts with the active end groups of the polyamide acid in this step.

The thickness of the coating to be formed from the varnish composition of the present invention is preferably about 1 to about 100 μm, although not particularly limited. If the composition is applied as a thicker layer to form a thicker coating, the coating is liable to form bubbles during heating. If it is desired to obtain coatings having a thickness greater than 100 μm, the composition may be applied several times.

Generally if a coating is to be formed from the present composition, the coating is heated to 80 to 150°C for 15 to 30 minutes until it is tackfree and is then heated to 200 to 400°C for 30 minutes to one hour. If several layers are to be formed, the above procedure is repeated, whereby a polyimide coating can be obtained which has a thickness greater than 100 µm.

Thus, heat-resistant resins (such as polyimides, polyamide imides and polyimide imidazopyrrolones) containing active hydrogen atoms in their molecules and precursors thereof are widely usable according to the invention. It is especially preferred to use varnishes of a polyimide and/or a polyamide acid which is the precursor of polyimide.

The present invention will be described below in detail with reference to the following examples, to which, however, the invention is not limited.

Examples 1—3 and Comparative Example A

200 g of 4,4'-diaminodiphenyl ether were dissolved in 1500 ml of N-methylpyrrolidone. This solution was reacted with 218 g of pyromellitic dianhydride added slowly giving a polyamide acid varnish having an inherent viscosity of 5.0 dl/g. Different amounts of a bismaleimide were added to the varnish as listed in Table 1 to obtain varnish compositions according to the invention. The bismaleimide used is represented by the following formula.

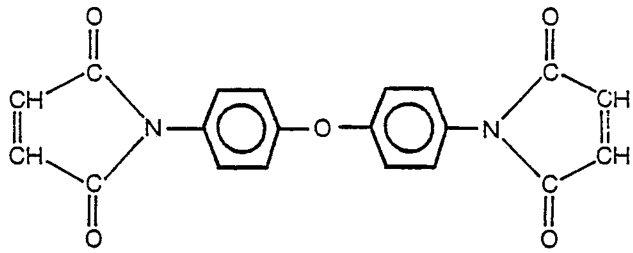

The varnish and the varnish compositions were applied to copper foil and heated at 150°C for 30 minutes and then at 300°C for 30 minutes to form polyimide coatings.

The coatings were tested for peel strength according to JIS C—6481. Table 1, showing the results, indicates that the coatings having the bismaleimide incorporated therein have a significantly higher peel strength than the coating of the Comparative Example containing no bismaleimide.

TABLE 1

| | Amount of bismaleimide added (% by weight) | Peel strength (kg/cm) |
|---|---|---|
| Comp. Ex. A | 0 | 1.02 |
| Example 1 | 2 | 1.55 |
| " 2 | 5 | 1.68 |
| " 3 | 10 | 1.75 |

Examples 4—6 and Comparative Example B

Different amounts of a bismaleimide were added to the varnish of the polyamide acid prepared in Examples 1 to 3 to obtain varnish compositions according to the invention. The bismaleimide used is represented by the following formula

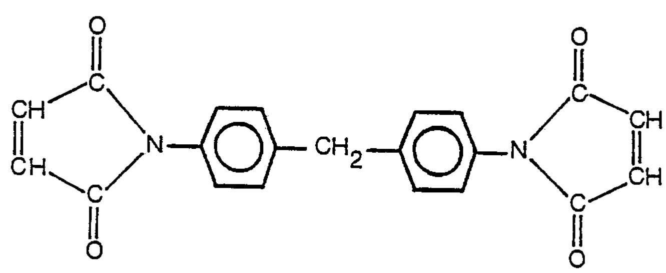

The varnish of Examples 1 to 3 and the varnish compositions obtained were applied to copper foil to

form polyimide coatings on the foil under the same conditions as in Examples 1 to 3. The coatings were separated from the copper foil, the foil being removed by etching. The films obtained were tested for tensile strength and elongation according to ASTM D—882. Table 2 shows the results.

TABLE 2

| | Amount of bismaleimide added (% by weight) | Tensile strength (kg/cm$^2$) | Elongation (%) |
|---|---|---|---|
| Comp. Ex. B | 0 | 870 | 14 |
| Example 4 | 2 | 1115 | 51 |
| 〃 5 | 5 | 1210 | 36 |
| 〃 6 | 10 | 1100 | 21 |

**Claims**

1. A heat-resistant resin composition characterized in that the composition comprises a varnish of a polyamide acid having an inherent viscosity of at least 1.0 dl/g which is the precursor of a heat-resistant polyimide resin containing active hydrogen atoms in the molecule and a bismaleimide compound or a derivative thereof admixed with the varnish.

2. A heat-resistant resin composition as defined in claim 1 which comprises 0.1 to 30 parts by weight of the bismaleimide compound or derivative thereof per 100 parts by weight of the solids of the polyamide acid varnish.

3. A heat-resistant resin composition as defined in claim 2 which comprises 1 to 10 parts by weight of the bismaleimide compound or derivative thereof per 100 parts by weight of the solids of the plolyamide acid varnish.

4. A heat-resistant resin composition as defined in claim 1 wherein the bismaleimide compound is presented by the formula

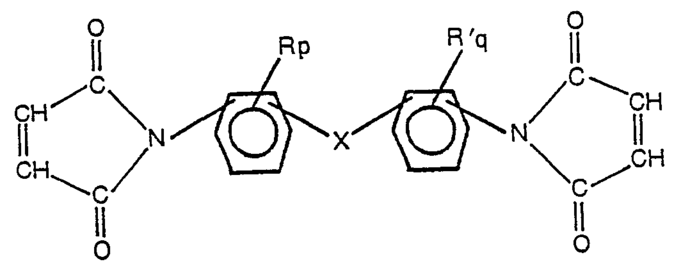

wherein X is $-CH_2-$, $-O-$, $-S-$, $-SO_2-$ or $-C(CH_3)_2-$, R and R′ are alkyl or halogen, and p and q are O or an integer of 1—4.

5. A heat-resistant resin composition as defined in claim 4 wherein the bismaleimide compound is represented by the formula

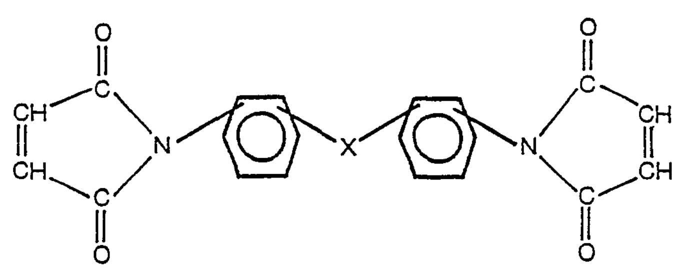

wherein X is $-CH_2-$, $-O-$, $-S-$, $-SO_2-$ or $-C(CH_3)_2-$.

6. A heat-resistant resin composition as defined in claim 1 wherein the bismalimide compound is represented by the formula

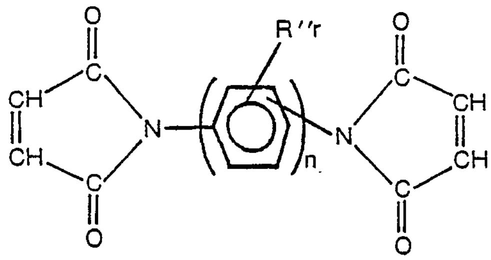

wherein R'' is alkyl or halogen, n is an integer of 1 or 2, and r is O or any integer from 1—4.

7. A heat-resistant resin composition as defined in claim 6 wherein the bismaleimide compound is represented by the formula

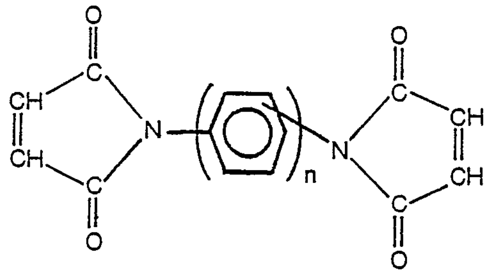

wherein n is an integer of 1 or 2.

8. The use of the heat-resistant resin compositions as claimed in claims 1 to 7 for coating metal substrates.

**Patentansprüche**

1. Wärmebeständige Harzmasse, dadurch gekennzeichnet, daß die Masse einen Lack aus einer Polyamidsäure mit einer Eigenviskosität von mindestens 1,0 dl/g, welcher die Vorstufe eines wärmebeständigen Polyimidharzes mit aktiven Wasserstoffatomen im Molekül ist, und eine Bismaleimid-Verbindung oder ein Derivat davon im Gemisch mit dem Lack umfaßt.

2. Wärmebeständige Harzmasse nach Anspruch 1, umfassend 0,1 bis 30 Gewichtsteile der Bismaleimid-Verbindung oder des Derivates davon pro 100 Gewichtsteile Feststoffe des Polyamidsäure-Lackes.

3. Wärmebeständige Harzmasse nach Anspruch 2, umfassend 1 bis 10 Gewichtsteile der Bismaleimid-Verbindung oder des Derivates davon pro 100 Gewichtsteile Feststoffe des Polyamidsäure-Lackes.

4. Wärmebeständige Harzmasse nach Anspruch 1, wobei die Bismaleimid-Verbindung durch die Formel

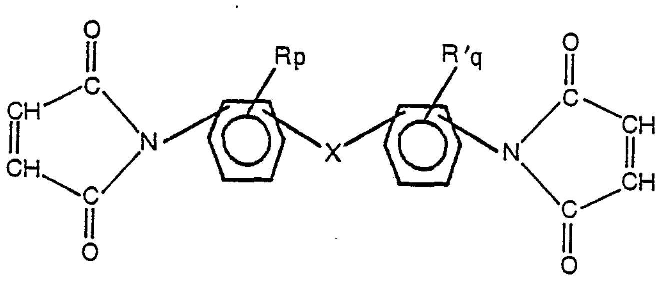

wiedergegeben wird, in der X $-CH_2-$, $-O-$, $-S-$, $-SO_2-$ oder $-C(CH_3)_2-$ bedeutet, R und R' Alkylreste oder Halogenatome darstellen, und p und q den Wert 0 haben oder eine ganze Zahl im Wert von 1 bis 4 sind.

5. Wärmebeständige Harzmasse nach Anspruch 4, wobei die Bismaleimid-Verbindung durch die Formel

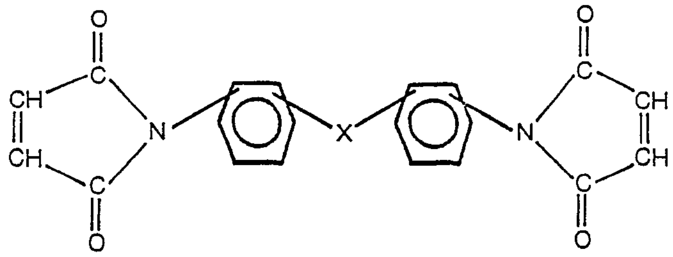

wiedergegeben wird, in der X $-CH_2-$, $-O-$, $-S-$, $-SO_2-$ oder $-C(CH_3)_2-$ bedeutet.

6. Wärmebeständige Harzmasse nach Anspruch 1, wobei die Bismaleimid-Verbindung durch die Formel

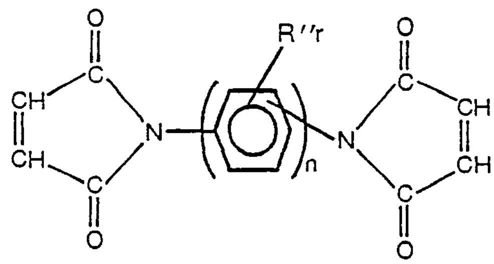

wiedergegeben wird, in der R'' einen Alkylrest oder ein Halogenatom bedeutet, n eine ganze Zahl im Wert vom 1 oder 2 ist und r den Wert 0 hat oder eine ganze Zahl im Wert von 1 bis 4 bedeutet.

7. Wärmebeständige Harzmasse nach Anspruch 6, wobei die Bismaleimid-Verbindung durch die Formel

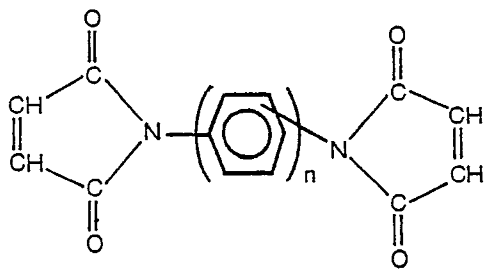

wiedergegeben wird, in der n eine ganze Zahl im Wert von 1 oder 2 ist.

8. Verwendung der wärmebeständigen Harzmassen nach den Ansprüchen 1 bis 7 zur Beschichtung von Metallsubstraten.

**Revendications**

1. Composition de résine résistant à la chaleur, caractérisée en ce qu'elle comprend un vernis d'un polyamide acide ayant une viscosité inhérente d'au moins 1,0 dl/g qui est le précurseur d'une résine polyimide résistant à la chaleur contenant des atomes d'hydrogène actifs dans sa molécule et un bismaléimide ou un dérivé de celui-ci mélangé au vernis.

2. Composition de résine résistant à la chaleur telle que définie à la revendication 1, comprenant 0,1 à 30 parties en poids de bismaléimide ou d'un dérivé de celui-ci pour 100 parties en poids de solides du vernis de polyamide acide.

3. Composition de résine résistant à la chaleur telle que définie à la revendication 2, comprenant 1 à 10 parties en poids du bismaléimide ou d'un dérivé de celui-ci pour 100 parties en poids de solides du vernis de polyamide acide.

4. Composition de résine résistant à la chaleur telle que définie à la revendication 1, dans laquelle le bismaléimide est représenté par la formule:

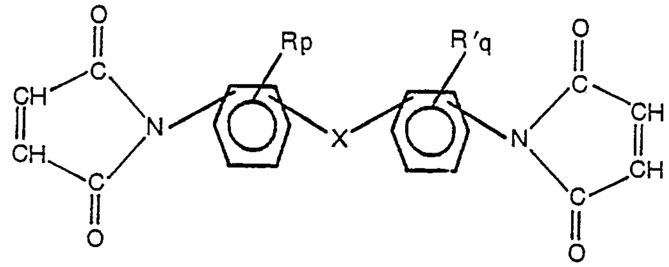

dans laquelle X est $-CH_2-$, $-O-$, $-S-$, $-SO_2-$ ou $-C(CH_3)_2-$, R et R' sont des radicaux alcoyle ou des atomes d'halogène et p et q sont O ou un entier de 1 à 4.

5. Composition de résine résistant à la chaleur telle que définie à la revendication 4, dans laquelle la bismaléimide est représenté par la formule:

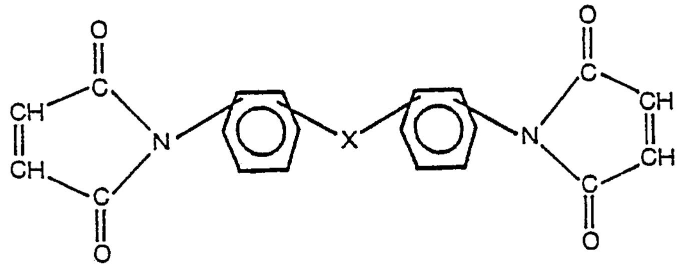

dans laquelle X est $-CH_2-$, $-O-$, $-S-$, $-SO_2-$ ou $-C(CH_3)_2-$.

6. Composition de résine résistant à la chaleur telle que définie à la revendication 1, dans laquelle le bismaléimide est représenté par le formule:

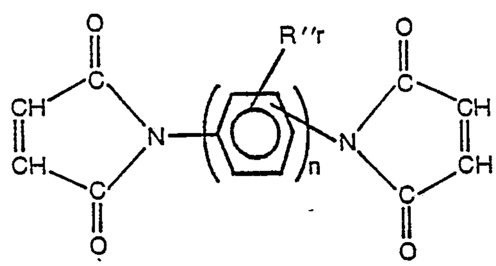

dans laquelle R'' est un groupe alcoyle ou un atome d'halogène, n est un entier de 1 ou 2 et R est O ou un entier de 1—4.

7. Composition de résine résistant à la chaleur telle que définie à la revendication 6, dans laquelle le bismaléimide est représenté par le formule:

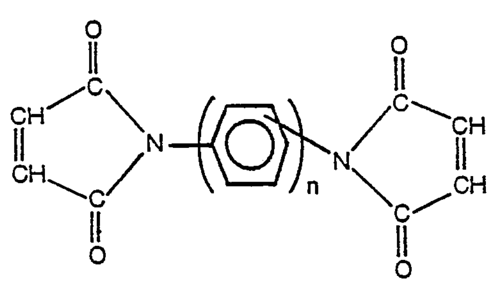

dans laquelle n est un entier de 1 ou 2.

8. Utilisation des compositions de résine résistant à la chaleur telles que revendiquées dans les revendications 1 à 7 pour le revêtement de substrats métalliques.